# EUROPEAN PATENT APPLICATION

(11) **EP 4 563 318 A1**
(43) Date of publication of application: **04.06.2025**
(21) Application number: 23865145.9
(22) Date of filing: 09.08.2023
(51) Int. Cl.: B29C 33/14, B29C 45/14

(54) **METHOD FOR PRODUCING RESIN MOLDED ARTICLE AND RESIN MOLDED ARTICLE**

(30) Priority: 13.09.2022 JP 2022145087
(71) Applicant: Nissha Co., Ltd., Kyoto-shi, Kyoto 604-8551 (JP)
(72) Inventor: SAKAMOTO, Shunsuke, Kyoto-shi Kyoto 604-8551 (JP); HAMAGUCHI, Tatsuya, Kyoto-shi Kyoto 604-8551 (JP); KUROSAKI, Toshifumi, Kyoto-shi Kyoto 604-8551 (JP)
(74) Representative: Isarpatent
(86) International application number: PCT/JP2023/029047
(87) International publication number: WO 2024/057785

(57) **Abstract**

A method for manufacturing a resin molded product prevents a resin from entering an electrode terminal in an insert and a surrounding portion when the insert and the surrounding portion include a greatly uneven surface or the position of the placed electrode terminal varies greatly for each molding process. A block (50) and a film (10) being the insert are held between a first surface (91a) of a first mold (91) being a first inner surface of a molding space (SP) and a second surface (92a) of a second mold (92) being a second inner surface of the molding space (SP) to elastically deform the block (50) containing an elastic polymer compound in a first portion (51) in contact with the first surface (91a) and a second portion (52) in contact with the second surface (92a). A space surrounding the block (50) is filled with a molten resin, and the resin surrounding the block (50) is solidified. The block (50) is removed from a resin molded body (20) to expose an electrode terminal (15).

## Description

### TECHNICAL FIELD

The present invention relates to a resin molded product including an insert and a method for manufacturing the resin molded product including an insert, and particularly, to a resin molded product including an insert including an electrode terminal and a method for manufacturing the resin molded product including an insert including an electrode terminal.

### BACKGROUND

Some resin molded products include an insert, such as a film or a substrate, that includes electrode terminals. The electrode terminals may be exposed to allow an external device to be electrically connected to electrical components, electronic components, or electric circuits included in the insert.

The insert including the electrode terminals may leave a gap between a metal mold and a portion of the electrode terminals in contact with the metal mold, and a resin may flow into the gap. To reduce such a gap, for example, Patent Literature 1 (Japanese Patent No. 3994683) describes an elastic member located at a distal end of a holding pin for the metal mold.

### CITATION LIST

### PATENT LITERATURE

Patent Literature 1: Japanese Patent No. 3994683

### BRIEF SUMMARY

### TECHNICAL PROBLEM

With the technique described in Patent Literature 1, for example, the sheet-like elastic member at the distal end of the holding pin allows manufacturing a resin molded product without a gap between the holding pin and the insert when the terminals include a slightly uneven portion.

However, the technique described in Patent Literature 1 cannot reduce the gap easily when the insert has a greatly non-uniform thickness, or when the electrode terminals and their surrounding portions include a greatly uneven portion.

One or more aspects of the present invention are directed to prevent a resin from entering an electrode terminal in an insert and its surrounding portion when the electrode terminal and the surrounding portion include a greatly uneven portion, or when the position of the placed electrode terminal varies greatly for each molding process.

### SOLUTION TO PROBLEM

In response to the above issue, aspects of the present invention are described below. Any of these aspects may be combined as appropriate.

A method according to an aspect of the present invention is a method for manufacturing a resin molded product. The method includes a first step of placing an insert between a first mold and a second mold, a second step of closing the first mold and the second mold and defining a molding space including the insert, a third step of pouring a molten resin into the molding space and forming a resin molded body including the insert, and a fourth step of opening the first mold and the second mold and removing the resin molded body including the insert. The insert has a main surface. The first step includes placing a block on the main surface to cause the block to be in contact with an electrode terminal located on the main surface for electrical connection. The second step includes holding the insert and the block between a first surface of the first mold and a second surface of the second mold and elastically deforming the block. The first surface of the first mold is a first inner surface of the molding space, and the second surface of the second mold is a second inner surface of the molding space. The block contains an elastic polymer compound in a first portion of the block in contact with the first surface and a second portion of the block in contact with the second surface. The third step includes filling a space surrounding the block with the molten resin and solidifying the molten resin surrounding the block. The fourth step includes removing the block from the resin molded body and exposing the electrode terminal.

With the above method for manufacturing a resin molded product, the block comes in close contact with the electrode terminal and its surrounding portion in closing the molds when the electrode terminal in the insert and the surrounding portion include a greatly uneven portion, or when the position of the placed electrode terminal varies greatly. The space surrounding the block is filled with the molten resin with the block being in close contact with the electrode terminal and the surrounding portion in forming the resin molded body.

In the method for manufacturing a resin molded product, the elastic polymer compound may contain a silicone elastomer or a fluoroelastomer, or may be processed to be spongy, thereby being elastic. In the above method for manufacturing a resin molded product, the block that is appropriately deformable and easily comes in close contact with the electrode terminal and the surrounding portion can be used for manufacturing the resin molded product.

In the above method for manufacturing a resin molded product, a first distance between a surface of the first portion and a surface of the second portion before elastic deformation of the block held between the first surface and the second surface may be in a range of 1.2 to 3 times a second distance between the surface of the first portion and the surface of the second portion after elastic deformation of the block. With the above method for manufacturing a resin molded product, the block is less likely to be damaged and can be sufficiently in close contact with the electrode terminal and the surrounding portion.

In the above method for manufacturing a resin molded product, the block may have a hardness of 20 Shore A or more and 70 Shore A or less. With the above method for manufacturing a resin molded product, the block having an appropriate hardness can be firmly in close contact with the electrode terminal and the surrounding portion.

In the above method for manufacturing a resin molded product, the elastic polymer compound may constitute greater than or equal to 50% of a total volume of the block. In the above method for manufacturing a resin molded product, the block that is appropriately deformable and easily comes in close contact with the electrode terminal and the surrounding portion can be used for manufacturing the resin molded product.

A resin molded product according to an aspect of the present invention includes a resin molded body having a predetermined shape, and an insert in the resin molded body. The insert includes an electrode terminal for electrical connection on a main surface of the insert. The resin molded body has an opening through which the electrode terminal is partially exposed. The opening has a concavely curved wall surface.

The resin molded product with this structure can fix, for example, a sealant firmly with the concavely curved wall surface of the opening when the opening is filled with the sealant.

In the above resin molded product, the electrode terminal may include an uneven surface or a curved surface. The resin molded product with this structure can have high quality with the electrode terminal having a shape appropriate for its application and no resin entering the electrode terminal or the surrounding portion.

In the above resin molded product, the insert includes a plurality of the electrode terminals. The plurality of electrode terminals are on a curved area of the insert, or on a first flat area and a second flat area of the insert. The resin molded product with this structure can have high quality with the plurality of electrode terminals each having a shape conforming to the shape of the insert and no resin entering the electrode terminals or their surrounding portions.

### ADVANTAGEOUS EFFECTS

The method for manufacturing a resin molded product according to the above aspects of the present invention can prevent a resin from entering when the electrode terminal and the surrounding portion include a greatly uneven portion, or when the position of the placed electrode terminal varies greatly for each molding process. In the resin molded product according to the above aspects of the present invention, the electrode terminal(s) is more likely to be electrically connected appropriately with no resin entering the electrode terminal(s) in the insert or the surrounding portion(s).

### BRIEF DESCRIPTION OF DRAWINGS

FIG. 1 is a plan view of an example resin molded product according to an embodiment of the present invention.
FIG. 2 is a sectional view of the resin molded product in FIG. 1 taken along line I-I.
FIG. 3 is a perspective view of an example resin molded body in which a film is inserted.
FIG. 4 is a flowchart of an example method for manufacturing the resin molded product according to one or more embodiments of the present invention.
FIG. 5 is a sectional view of an example film used in the method for manufacturing the resin molded product.
FIG. 6 is a sectional view of a first mold and a second mold with the film and a block placed between the first mold and the second mold.
FIG. 7 is a sectional view of the first mold and the second mold being closed with the film and the block between the first mold and the second mold.
FIG. 8 is a sectional view of the first mold and the second mold being closed with a molten resin injected in a molding space between the first mold and the second mold.
FIG. 9 is a sectional view of a resin molded body, the film, and the block removed from the first mold and the second mold.
FIG. 10 is a sectional view of the resin molded body in FIG. 9 with the block being removed from the resin molded body.
FIG. 11 is a sectional view of another example resin molded product according to modification 1A.
FIG. 12 is a sectional view of an example film including a restrictor in modification 1B.
FIG. 13 is a sectional view of an example first mold including a preventer and an example second mold in modification 1C.
FIG. 14 is a sectional view of an example first mold, an example second mold, and an example film in modification 1D.
FIG. 15 is a sectional view of an example film in modification 1E.
FIG. 16 is a sectional view of the film in FIG. 15 taken along line II-II.
FIG. 17 is a sectional view of an example film in modification 1F.
FIG. 18 is a sectional view of an example electrode terminal in modification 1G.
FIG. 19 is a sectional view of an example electrode terminal in modification 1G.
FIG. 20 is a sectional view of an example electrode terminal in modification 1G.
FIG. 21 is a sectional view of an example electrode terminal in modification 1G.
FIG. 22 is a sectional view of an example electrode terminal in modification 1G.
FIG. 23 is a plan view of electrode terminals and blocks before injection molding in modification 1H.
FIG. 24 is a sectional view of the electrode terminal and the block in FIG. 23 taken along line III-III.
FIG. 25 is a sectional view of the electrode terminal and the block in FIG. 23 taken along line IV-IV.
FIG. 26 is a sectional view of the electrode terminal and the block in FIG. 23 taken along line V-V.
FIG. 27 is a sectional view of the electrode terminals and the blocks in FIG. 23 taken along line VI-VI.
FIG. 28 is a sectional view of an example resin molded product according to a second embodiment.
FIG. 29 is a sectional view of another example resin molded product according to the second embodiment.

### DETAILED DESCRIPTION

### First Embodiment

### (1) Overview of Resin Molded Product

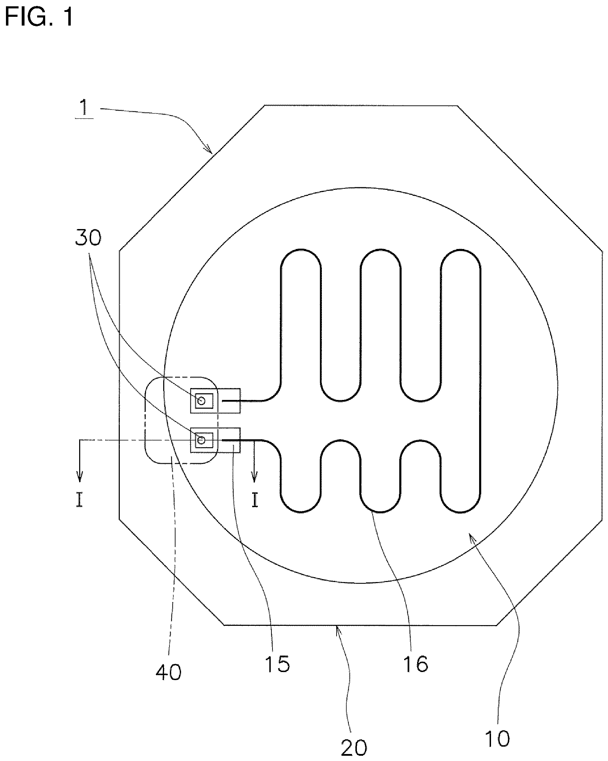

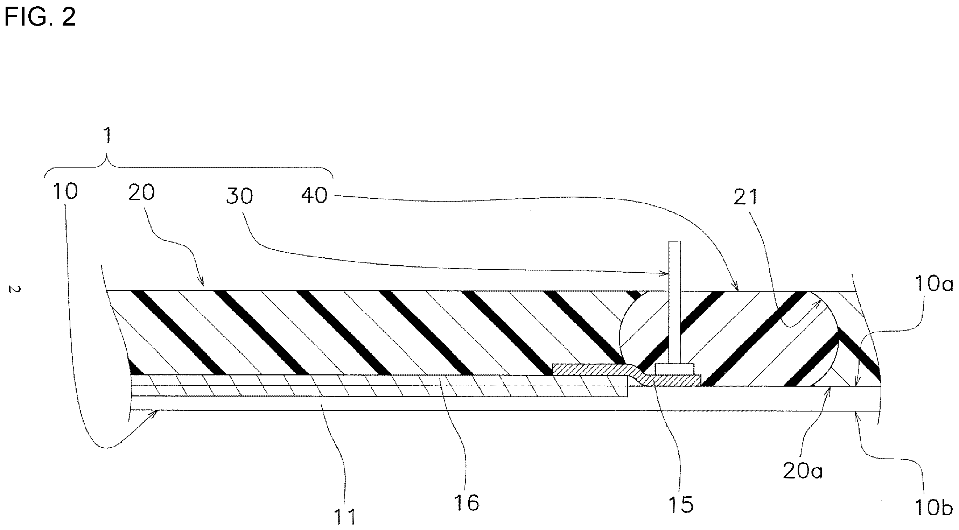

FIGS. 1 and 2 show an example resin molded product manufactured with a method for manufacturing a resin molded product according to a first embodiment of the present invention. A resin molded product 1 shown in FIGS. 1 and 2 includes a film 10 that is an insert and a resin molded body 20 in which the film 10 is inserted. FIG. 1 shows the planar shape of the resin molded product 1. FIG. 2 shows a cross section of the resin molded product 1 taken along line I-I in FIG. 1. The film 10 may be referred to as a film-like device.

The resin molded product 1 shown in the figures is a heater. The film 10 includes, on a main surface 10a, a copper wire 16 that generates heat. The film 10 also includes, on the main surface 10a, electrode terminals 15 used for electrical connection of the copper wire 16. The copper wire 16 is connected to the electrode terminals 15 to receive power through the electrode terminals 15.

In the resin molded product 1, the resin molded body 20 is formed on the main surface 10a and is not formed on another main surface 10b. In other words, the other main surface 10b of the film 10 is exposed to outside the resin molded product 1.

Although the other main surface 10b is exposed to outside the resin molded product 1 in this example, the resin molded product according to one or more embodiments of the present invention may have the other main surface 10b not exposed to outside the resin molded product 1 and, for example, may have the other main surface 10b covered with the resin molded body as well.

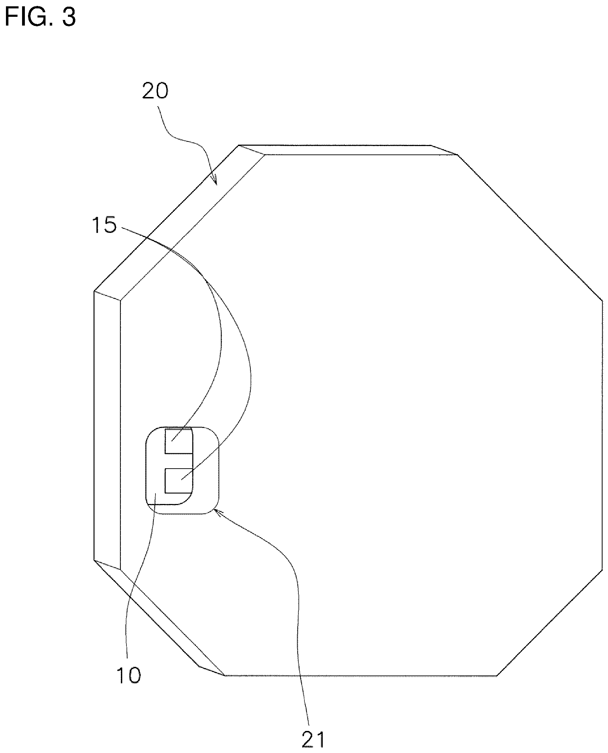

The resin molded body 20 is an octagonal plate as shown in FIG. 3. The resin molded body 20 has an opening 21 in a portion overlapping portions of the electrode terminals 15 in a plan view. Although the opening 21 is located in the portion of the resin molded body 20 overlapping portions of the electrode terminals 15 in a plan view in this example, the opening 21 may be located in a portion of the resin molded body 20 overlapping the entire electrode terminals 15 in a plan view. The opening 21 is a hole in a shape of a rectangular prism extending through the resin molded body 20. With the resin molded body 20 having the opening 21 in the portion overlapping the electrode terminals 15 in a plan view, the electrode terminals 15 are partially exposed at the bottom of the opening 21.

The resin molded product 1 includes connection pins 30 electrically connected to the respective electrode terminals 15. The connection pins 30 are connected to an electric apparatus, an electric circuit, or an electric device external to the resin molded product 1. Examples of the electric apparatus include a power supply apparatus that supplies power to the heater. Examples of the electric circuit include a power supply circuit that supplies power to the heater. Examples of the electric device include a power generation element that supplies power to the heater. With the resin molded product 1 functioning as a heater in this example, examples of the external electric apparatus, the electric circuit, or the electric device include a power supply apparatus, a power supply circuit, or a power generation element. However, the resin molded product 1 may have an electrical function other than a heater, and different external electric apparatuses, electric circuits, or electric devices may be selected based on the electrical function of the resin molded product 1. The electrode terminals 15 and the respective connection pins 30 are joined to each other with, for example, solder or a conductive paste.

In the resin molded product 1, the opening 21 in the resin molded body 20 is filled with a sealant 40. The sealant 40 is filled to be flush with an exposed surface of the resin molded body 20. The sealant 40 is a sealing member that prevents moisture from entering the electrode terminals 15 and joint portions between the electrode terminals 15 and the respective connection pins 30. Examples of the sealant 40 include an epoxy resin, an acrylic ultraviolet (UV) curable resin, a polyethylene resin, a polypropylene resin, a urethane resin, a polyimide resin, a fluororesin, and a silicone resin.

### (2) Method for Manufacturing Resin Molded Product

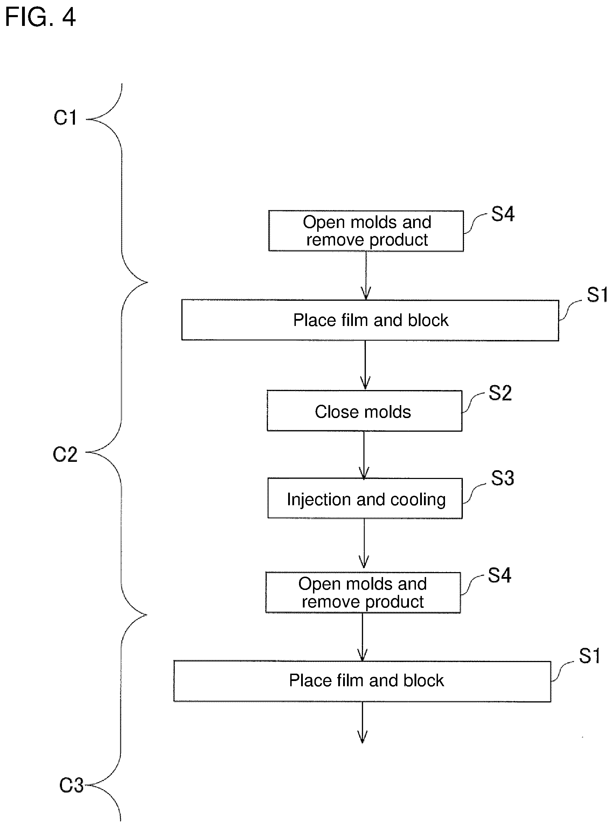

FIG. 4 shows a part of a flowchart of a method for manufacturing the resin molded product 1. In three cycles C1, C2, and C3 shown in FIG. 4, three resin molded bodies each including an insert are manufactured for manufacturing three resin molded products 1. In this example, a single resin molded body is manufactured in each of the cycles C1, C2, and C3 of the manufacturing process for ease of explanation. However, multiple resin molded bodies may be manufactured in each of the cycles C1, C2, and C3. A single resin molded body is manufactured in the cycle C1 before the cycle C2 of the manufacturing process. A single resin molded body is manufactured in the cycle C3 after the cycle C2 of the manufacturing process.

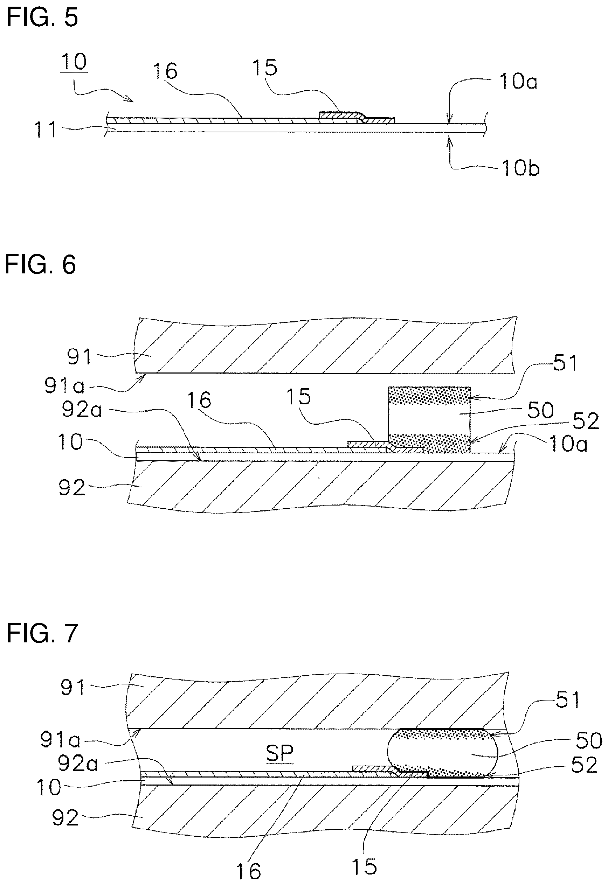

FIGS. 5 to 10 show, in the order of processing in the method for manufacturing the resin molded product 1, cross sections of the film 10 or the resin molded body 20 with the film 10 inserted. A cross section of the resin molded product 1 including the film 10 and the resin molded body 20 is shown in FIG. 2 described above. To manufacture the resin molded product 1, multiple films 10 shown in FIG. 5 are prepared. Each film 10 as an insert includes a film substrate 11. The film 10 includes, on the main surface 10a, the copper wire 16 and the electrode terminals 15 electrically connected to the copper wire 16. The film 10 is shaped to conform to the resin molded product 1 by, for example, pressing. In this example, the film 10 is processed to have a circular planar shape smaller than the octagonal resin molded product 1. The circular film 10 including the copper wire 16 is located on a middle portion of the resin molded body 20 in a plan view.

In a first step S1, as shown in FIG. 6, the film 10 as an insert is placed between a first mold 91 and a second mold 92. The film 10 is located with the main surface 10a facing a space to be a molding space SP (refer to FIG. 7).

In a second step S2, the first mold 91 and the second mold 92 are closed to define the molding space SP including the film 10 (refer to FIG. 7).

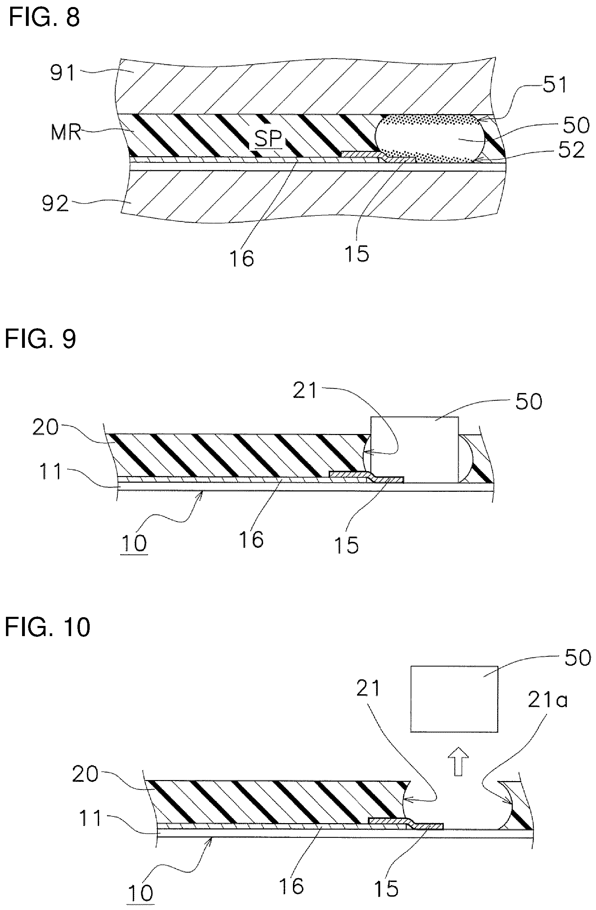

In a third step S3, a molten resin MR is poured into the molding space SP to form the resin molded body 20 with the film 10 inserted (refer to FIG. 8). In other words, the molten resin MR is injected into the molding space SP, and is cooled and solidified in the third step S3.

In a fourth step S4, the first mold 91 and the second mold 92 are opened, and the resin molded body 20 with the film 10 inserted is removed. FIG. 9 shows the removed resin molded body 20.

In a fifth step S5, the connection pins 30 are connected to the respective electrode terminals 15 with, for example, solder, and the opening 21 is filled with the sealant 40. With the connection pins 30 connected and the opening 21 filled with the sealant 40, the manufacture of the resin molded product 1 shown in FIGS. 1 and 2 is complete. The opening 21 in the resin molded body 20 is formed with a block 50 and has a concavely curved wall surface 21a (refer to FIG. 10). The concavely curved wall surface 21a allows the sealant 40 to be anchored and firmly fixed to the resin molded body 20. A metal mold cannot be removed easily from the resin molded body 20 and thus cannot form a curved surface such as the wall 21a easily. The block 50 formed from an elastically deformable material returns to the original shape when a force applied to the block 50 in mold-closing is released in mold-opening, and is thus removed easily from the resin molded body 20.

In the first step S1 described above, the block 50 is placed on the main surface 10a to be in contact with the electrode terminals 15 on the main surface 10a of the film 10 (refer to FIG. 6). The electrode terminals 15 are used for electrical connection of the copper wire 16.

In the second step S2 described above, the film 10 and the block 50 are held between a first surface 91a of the first mold 91 and a second surface 92a of the second mold 92 to elastically deform the block 50 (refer to FIG. 7).

The first surface 91a of the first mold 91 is a first inner surface of the molding space SP, and the second surface 92a of the second mold 92 is a second inner surface of the molding space SP. The molding space SP may be surrounded by the first surface 91a and the second surface 92a alone. In other words, the inner surfaces of the molding space SP may include a first portion (the first surface 91a) and a second portion (the second surface 92a) alone. The molding space SP may be surrounded by the first surface 91a, the second surface 92a, and a third surface other than the first and second surfaces 91a and 92a. In other words, the inner surfaces of the molding space SP may include the first portion (the first surface 91a), the second portion (the second surface 92a), and a third surface other than these portions. The third surface is, for example, a surface of a third mold combined with the first mold 91 and the second mold 92, or a surface of a movable pin located in a mold but not a part of the first mold 91 or the second mold 92 in the molding space SP.

The block 50 contains an elastic polymer compound at least in a first portion 51 in contact with the first surface 91a and in a second portion 52 in contact with the second surface 92a. For the block 50 shown in FIG. 7, its entire portion is formed from an elastic polymer compound. The first portion 51 and the second portion 52 respectively in contact with the first surface 91a and the second surface 92a thus contain an elastic polymer compound.

In the third step S3 described above, the molten resin MR fills a space surrounding the block 50, and is cooled and solidified (refer to FIG. 8). The molten resin MR does not enter a portion on which the block 50 is located. As shown in FIG. 8, each electrode terminal 15 includes a stepped portion (an example uneven portion) due to the thickness of the copper wire 16. However, the block 50 deforms greatly and does not create a gap through which the molten resin MR enters between the block 50 and the electrode terminals 15.

In the fourth step S4 described above, the resin molded body 20 is removed from the first mold 91 and the second mold 92 (refer to FIG. 9), the block 50 is removed from the resin molded body 20 (refer to FIG. 10), and the electrode terminals 15 are exposed through the opening 21.

As shown in FIG. 9, the elastically deforming block 50 returns to its original shape when released from being held between the first mold 91 and the second mold 92. The block 50 in its original shape protrudes from the resin molded body 20. Thus, for example, a robotic arm holds a portion of the block 50 protruding from the resin molded body 20 to remove the block 50 from the resin molded body 20. The protruding portion of the block 50 serves as a hold for easily holding the block 50. For example, the block 50 removed in the fourth step S4 in the preceding cycle C1 may be placed, with a robotic arm for example, on the film 10 placed between the first mold 91 and the second mold 92 in the first step S1 in the subsequent cycle C2. The block 50 removed in the fourth step S4 in the cycle C2 may be placed on the film 10 placed between the first mold 91 and the second mold 92 in the first step S1 in the cycle C3. The block 50 may be used in the multiple cycles C1, C2, and C3 in this manner to reduce the number of blocks 50 used.

### (3) Material for Manufacturing Resin Molded Product

### (3-1) Insert

In the first embodiment, the film 10 is described as an example insert. The film substrate 11 in the film 10 is to insulate the copper wire 16. The film substrate 11 may thus be insulating. Examples of the insulating film substrate 11 include a resin film and an elastomer film. Examples of the material for the resin film include a thermosetting resin and a thermoplastic resin. Examples of the material for the resin film include polyimide, polyethylene terephthalate (PET), polycarbonate, and cycloolefin.

The insert is not limited to a film member, and may be, for example, a member having a three-dimensional shape. The insert may be, for example, a molded interconnect device (MID). The insert may be, for example, a three-dimensional member having a surface on which wiring is formed by laser direct structuring (LDS).

### (3-2) Material for Resin Molded Body

Examples of a thermoplastic resin used as the material for the molten resin MR include a polyester resin, a PET resin, an acrylic resin, a polycarbonate resin, a polybutylene terephthalate (PBT) resin, a triacetylcellulose resin, a polyimide resin, a polyethylene naphthalate (PEN) resin, a liquid crystal polymer (LCP) resin, a cycloolefin polymer (COP), a styrene resin, and an acrylonitrile butadiene styrene (ABS) resin.

### (3-3) Electrode Terminal and Copper Wire

Examples of the material for the electrode terminals 15 include a metal such as gold (Au), nickel (Ni), tin (Sn), copper (Cu), aluminum (Al), silver (Ag), or platinum (Pt), and an alloy containing these metals. The electrode terminals 15 are formed by, for example, plating or deposition. Each electrode terminal 15 has a thickness of, for example, about 50 to 500 µm. The planar shape of the electrode terminals 15 is, for example, a rectangle with the length of each long side and each short side being in a range of 1 to 50 mm. The copper wire 16 has a thickness of, for example, about 10 to 500 µm. The copper wire 16 shown in FIG. 2 is formed by embedding a part of a copper wire into the film substrate 11 with, for example, laser processing or supersonic processing. However, the copper wire 16 may be formed without embedding a copper wire into the film substrate 11. In the example shown in FIGS. 5 to 10, a copper wire is not embedded in the film substrate 11. When the copper wire is not embedded in the film substrate 11, the copper wire 16 is formed by, for example, fixing a copper wire on the film substrate 11 with an adhesive. The copper wire 16 has a width in a range of, for example, 0.01 to 0.5 mm.

The copper wire may be formed by, for example, screen printing or photolithography. The copper wire formed with such a method may have a thickness of, for example, 0.1 to 20 µm. Such a copper wire 16 has a width in a range of, for example, 0.05 to 5 mm. In the example described above, the copper wire 16 appropriate for a heater is used. However, the wire connected to the electrode terminals 15 is not limited to the copper wire 16, and may be formed from a metal such as nickel (Ni), aluminum (Al), gold (Au), or silver (Ag), or may be formed from an alloy.

### (3-4) Block

As described above, the block 50 contains an elastic polymer compound in the first portion 51 and the second portion 52 respectively in contact with the first surface 91a of the first mold 91 and the second surface 92a of the second mold 92. In the first embodiment, the entire portion of the block 50 is formed from the elastic polymer compound. The polymer compound for the block 50 contains a silicone elastomer or a fluoroelastomer, or is processed to be spongy, thereby being elastic. For example, the entire portion of the block 50 is formed from a silicone elastomer or a fluoroelastomer. Examples of the material for the block 50 processed to be spongy and elastic include foamed polyethylene. When a spongy member is used for the block 50, the spongy member may be processed to have smooth surfaces to allow the block 50 to be removed easily through the opening 21.

A first distance between a surface of the first portion 51 and a surface of the second portion 52 before elastic deformation of the block 50 held between the first surface 91a and the second surface 92a is in a range of 1.2 to 3 times a second distance between the surface of the first portion 51 and the surface of the second portion 52 after elastic deformation of the block 50. When the value obtained by dividing the first distance by the second distance (the first distance/the second distance) is less than 1.2, the block 50 is less likely to be in close contact with the electrode terminals 15 and portions surrounding the electrode terminals 15, and more likely to leave a gap. When the value obtained by dividing the first distance by the second distance (the first distance/the second distance) is greater than 3, the elastically deformed block 50 is less likely to be within a designed space, causing more variations in the shape of the opening 21 during manufacturing.

The block 50 may have a hardness of 20 Shore A or more and 70 Shore A or less. The block 50 with a hardness less than 20 Shore A (being softer) is deformed more greatly by the molten resin MR. Thus, the molten resin MR is more likely to enter between the block 50 and the electrode terminals 15. The block 50 with a hardness greater than 70 Shore A (being harder) is more likely to be damaged when elastically deformed between the first surface 91a of the first mold 91 and the second surface 92a of the second mold 92, or is less likely to follow the shapes of the electrode terminals 15 and thus more likely to leave a gap.

### (3-5) Sealant

Examples of the material for the sealant 40 include a resin adhesive and an inorganic adhesive. The resin adhesive may be, for example, an acrylate UV curable resin, a polyethylene resin, a polypropylene resin, a urethane resin, an epoxy resin, a fluororesin, or a silicone resin. The inorganic adhesive may be, for example, glass frit or ceramics.

### (4) Modifications

### (4-1) Modification 1A

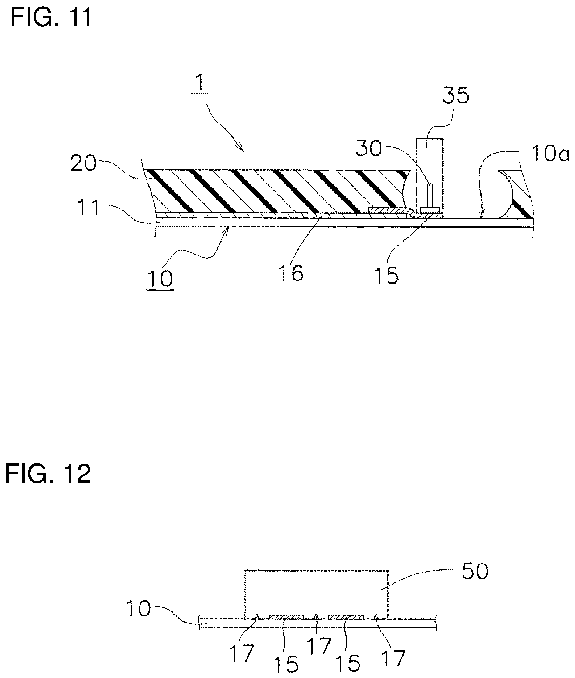

In the first embodiment, the opening 21 is filled with the sealant 40. However, the opening 21 in the resin molded product 1 may not be filled with the sealant 40. FIG. 11 shows an example resin molded product 1 having the opening 21 not filled with the sealant 40.

In the resin molded product 1 shown in FIG. 11, the opening 21 is not filled with the sealant 40, and the main surface 10a of the film 10 is exposed through the opening 21. The electrode terminals 15 are also exposed through the opening 21. Each of the exposed electrode terminals 15 is joined to, for example, the connection pin 30, and the connection pin 30 is connected to a connector 35.

### (4-2) Modification 1B

In the first embodiment, the block 50 is simply placed on the film 10 without a member for specifically restricting the movement of the block 50. When formed from, for example, a silicone elastomer or a fluoroelastomer, the block 50 comes in close contact with the main surface 10a of the film 10 without a member for restricting the movement of the block 50 and is less likely to move from the position at which the block 50 is placed.

However, the block 50 receives a force from the molten resin MR when the molten resin MR is injected. The film 10, or the insert, may thus include a restrictor for further restricting the movement of the block 50. For example, as shown in FIG. 12, the film 10 may include protrusions 17 as the restrictors. The protrusions 17 can restrict the movement of the block 50 in the planar direction of the main surface 10a. The protrusions 17 may be formed with, for example, the same method as forming the electrode terminals 15. The multiple protrusions 17 may be arranged to surround the electrode terminals 15. The restrictors are the protrusions 17 in this example, but not limited to the protrusions 17. For example, the film substrate 11 may have an opening that receives a part of the block 50.

### (4-3) Modification 1C

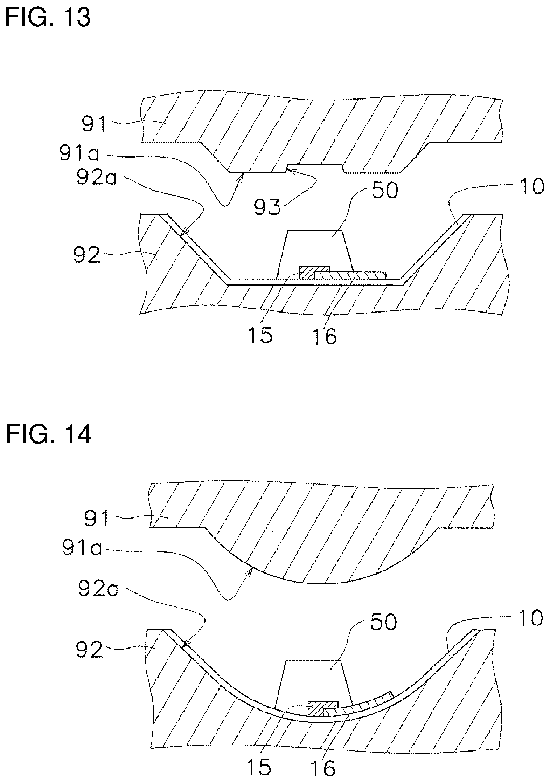

In the first embodiment, the block 50 placed on the film 10 is held and elastically deformed between the flat first surface 91a and the flat second surface 92a. In this example, neither the first mold 91 nor the second mold 92 include a portion for preventing the movement of the block 50. For example, as shown in FIG. 13, the first mold 91 may have a recess 93 as a preventer on the first surface 91a. When the first mold 91 and the second mold 92 are closed, the recess 93 receives a part of the block 50. With the recess 93 receiving a part of the block 50, the block 50 is less likely to move in the planar direction of the first surface 91a. The preventer may be included in at least one of the first mold 91 or the second mold 92.

### (4-4) Modification 1D

In the first embodiment, the electrode terminals 15 are located on a flat portion (a flat portion 20a; refer to FIG. 2) of the resin molded body 20. However, the electrode terminals 15 may be located on a curved portion of the resin molded body 20. In this case, as shown in FIG. 14, each electrode terminal 15 is located on the second surface 92a that is curved. In the example shown in FIG. 14, the electrode terminal 15 and a portion surrounding the electrode terminal 15 are also curved. When the molds are closed, the block 50 deforms along their curved shapes. Thus, the block 50 can sufficiently prevent a gap through which the molten resin MR enters at the electrode terminals 15 and portions surrounding the electrode terminals 15 during injection molding.

### (4-5) Modification 1E

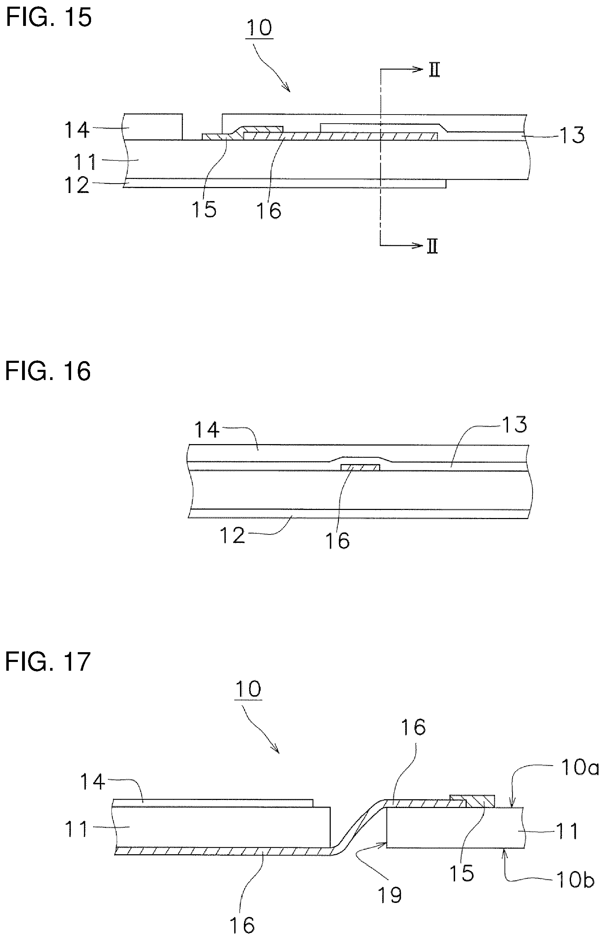

In the first embodiment, the film 10 includes the film substrate 11 that is a single resin layer including the electrode terminals 15 and the copper wire 16. However, the film 10 may be multilayered. As shown in FIGS. 15 and 16, the film 10 may include an outer design layer 12 decorating an outer surface of the resin molded product, an inner design layer 13 decorating an inner surface of the resin molded product, and an overcoat layer 14 protecting the copper wire 16. FIG. 16 shows a cross section of the film 10 taken along line II-II in FIG. 15. The outer design layer 12 is located to, for example, hide the copper wire 16 from outside or to decorate the resin molded product 1. The inner design layer 13 is located to, for example, hide the copper wire 16 from outside when the resin molded body 20 is transparent or semitransparent, or to decorate the resin molded product 1.

### (4-6) Modification 1F

In the first embodiment, the copper wire 16 is located on the main surface 10a of the film 10 alone. However, at least one of the electrode terminals 15 or the copper wire 16 may be located on multiple surfaces of the film 10. The insert may include the wire, or the electrode terminals and the wire on its multiple surfaces. FIG. 17 shows the film 10 including the copper wire 16 on both the main surface 10a and the other main surface 10b. The copper wire 16 extends on the main surface 10a and the other main surface 10b through an opening 11a in the film substrate 11. As in the first embodiment, the resin molded body 20 is formed on the main surface 10a of the film 10 shown in FIG. 17 to manufacture the resin molded product 1.

In some embodiments, multiple film substrates 11 may be stacked on one another, and each of the multiple film substrates 11 may include the electrode terminals 15 and the copper wire 16.

### (4-7) Modification 1G

In the first embodiment, each electrode terminal 15 has a uniform thickness. In the first embodiment, each electrode terminal 15 is deformed and stepped between a portion of the electrode terminal 15 in contact with the film substrate 11 and a portion of the electrode terminal 15 in contact with the copper wire 16 (refer to FIG. 5). In modification 1D, each electrode terminal 15 is deformed concavely (refer to FIG. 14). However, each electrode terminal 15 may have a shape other than the shapes described above.

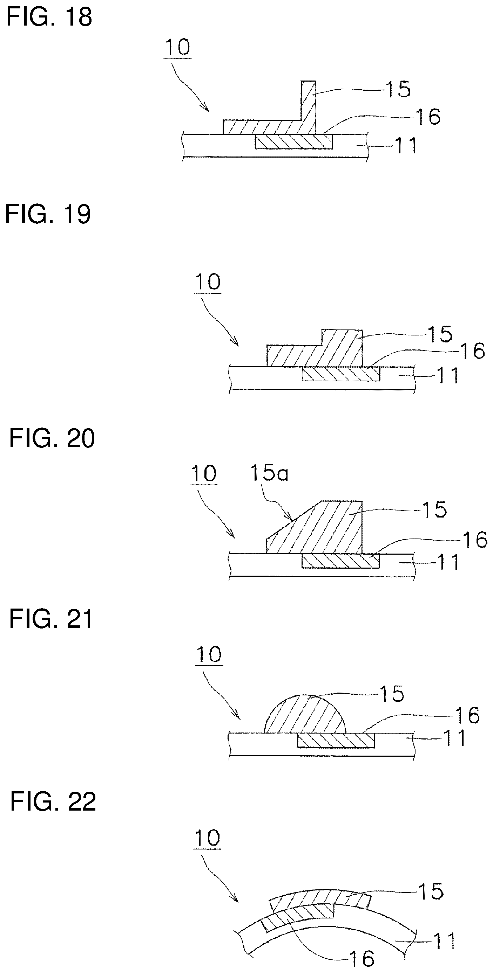

FIG. 18 shows the electrode terminal 15 having an L-shaped cross section.

FIG. 19 shows the electrode terminal 15 having a stepped cross section. The stepped electrode terminal 15 includes a single step in FIG. 19, but may include multiple steps.

FIG. 20 shows the electrode terminal 15 including a slope 15a. The electrode terminal 15 includes a single slope 15a in FIG. 20. However, the single electrode terminal 15 may include multiple slopes 15a.

FIG. 21 shows the electrode terminal 15 having an arc surface. The electrode terminal 15 may have a curved surface other than an arc surface.

FIG. 22 shows the electrode terminal 15 curved convexly in a direction opposite to the film substrate 11.

The electrode terminals 15 in FIGS. 18, 19, 20, 21, and 22 may have any planar shape, and may be, for example, rectangular, square, elliptic, or circular.

As shown in FIGS. 18, 19, 20, 21, and 22, the block 50 deforms sufficiently and can prevent a gap when an exposed surface of each electrode terminal 15 is not flat.

### (4-8) Modification 1H

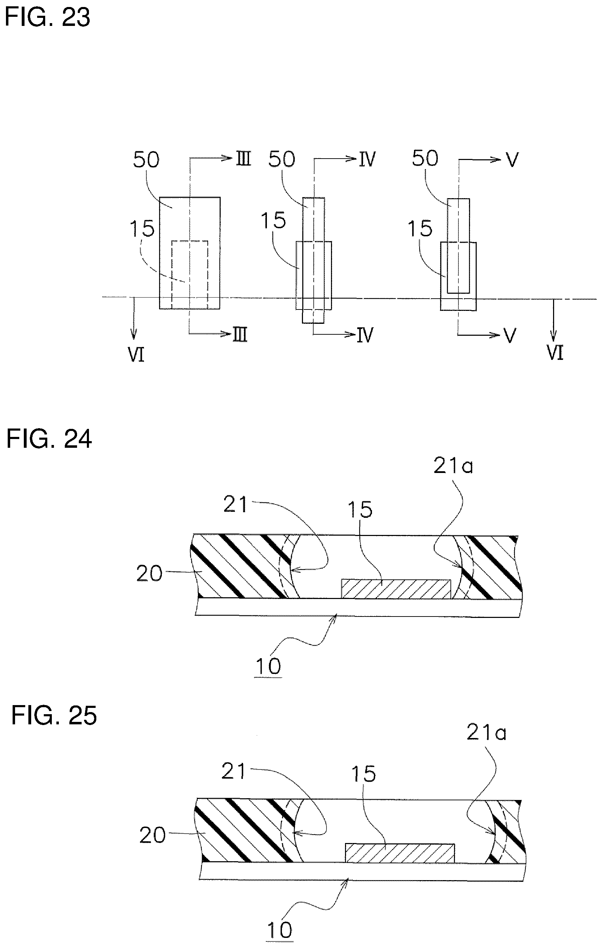

In the first embodiment, the single block 50 is used for the multiple electrode terminals 15. However, as described with reference to FIGS. 23, 24, 25, 26, and 27, a single block 50 may be used for a single electrode terminal 15. FIG. 23 shows three example relationships between the rectangular-prism electrode terminal 15 and the rectangular-prism block 50. In FIG. 23, each electrode terminal 15 and each block 50 have a rectangular planar shape in a plan view. The first surface 91a of the first mold 91 and the second surface 92a of the second mold 92 are, for example, parallel to the rectangular surface of each electrode terminal 15 and the rectangular surface of each block 50 in FIG. 23. FIG. 23 shows the blocks 50 placed on the film 10 before injection molding.

In a first example, the block 50 covers the entire portion of the electrode terminal 15 in a plan view. FIG. 24 shows cross sections of the film 10 and the resin molded body 20 in the first example taken along line III-III.

In a second example, the block 50 does not cover portions of the electrode terminal 15 in the lateral direction in a plan view. FIG. 25 shows cross sections of the film 10 and the resin molded body 20 in the second example taken along line VI-VI.

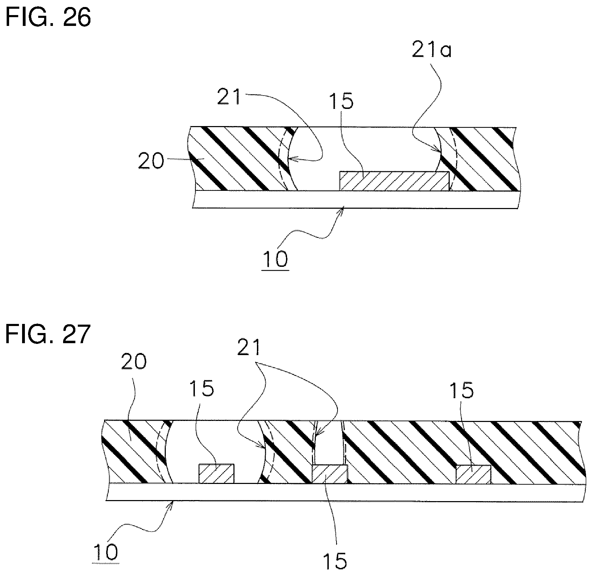

In a third example, the block 50 does not cover portions of the electrode terminal 15 in the lateral and longitudinal directions in a plan view. FIG. 26 shows cross sections of the film 10 and the resin molded body 20 in the third example taken along line V-V.

FIG. 27 shows cross sections of the film 10 and the resin molded body 20 in each of the first, second, and third examples taken along line VI-VI.

The opening 21 in the resin molded body 20 formed with the block 50 has the concavely curved wall surface 21a. This results from the block 50 elastically deformed greatly in a portion farther from the first surface 91a and the second surface 92a when the block 50 is elastically deformed by the first surface 91a and the second surface 92a.

Of the four sides of the rectangular block 50 in a plan view, the side not overlapping the electrode terminals 15 and located farthest from the electrode terminals 15 is more likely to deform due to pressure from the molten resin MR. A portion of the block 50 overlapping the electrode terminals 15 has a higher internal pressure due to the thickness of the electrode terminal 15. In contrast, a portion of the block 50 not overlapping the electrode terminals 15 has a lower internal pressure with no overlapping with the electrode terminals 15. The side farther from the electrode terminals 15 is thus more likely to deform. To avoid this, for example, the thickness of the block 50 may be changed to allow the block 50 to be pressed uniformly. In this case, the block 50 may be thinner at a portion overlapping the electrode terminals 15 and may be thicker at a portion not overlapping the electrode terminals 15 when the first mold 91 and the second mold 92 are not closed.

The first surface 91a and the second surface 92a may not be flat or be parallel to each other. The shape of the block 50 is thus not limited to a rectangular prism, and may have a shape selected from various shapes based on the shapes of the first surface 91a and the second surface 92a or the positional relationship between the first surface 91a and the second surface 92a.

### (4-9) Modification 1I

In the first embodiment, the electrode terminals 15 are located on the main surface 10a, and the block 50 is placed on the main surface 10a. However, the electrode terminals 15 may also be located on the other main surface 10b, and the block 50 may also be placed on the other main surface 10b. For example, the film substrate 11 may be located upright in the vertical direction, and the block 50 may be attached to and placed on each of the main surface 10a and the other main surface 10b.

### (4-10) Modification 1J

In the first embodiment, the entire portion of the block 50 is formed from a single type of polymer compound. However, the block 50 may be formed from multiple types of polymer compounds. For example, polymer compounds that are the same silicone elastomers with different Shore A hardness may be used for the first portion 51 and the second portion 52 of the block 50. A silicone elastomer and a fluoroelastomer may be used for the first portion 51 and the second portion 52 of the block 50.

A material other than a polymer compound may be used for a portion of the block 50 other than the first portion 51 or the second portion 52. For example, a silicone elastomer may be used for the first portion 51 and the second portion 52, and a metal plate or a ceramic plate may be located between the first portion 51 and the second portion 52. In this case, the block 50 has a three-layer structure of a silicone elastomer, a metal plate or a ceramic plate, and a silicone elastomer. When a material other than a polymer compound is used for the block 50 as described above, the polymer compound may constitute greater than or equal to 50% of the total volume of the block 50. With the polymer compound constituting greater than or equal to 50% of its total volume, the block 50 is sufficiently elastically deformable.

### Second Embodiment

### (5) Overview of Resin Molded Product

In the first embodiment, the multiple electrode terminals 15 are located on the same flat surface. However, the multiple electrode terminals may be located on different surfaces or on a curved surface.

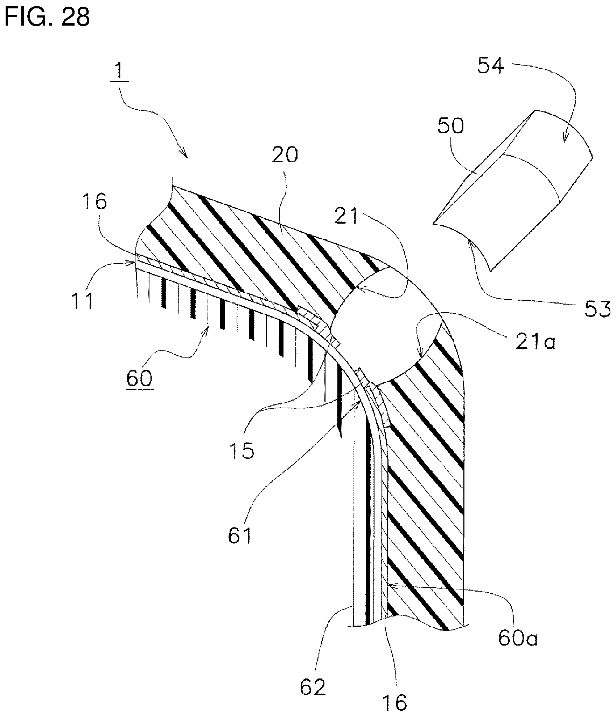

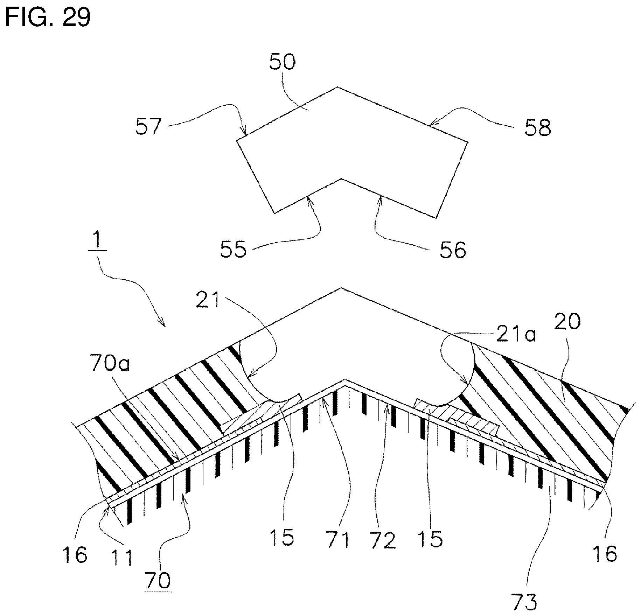

FIG. 28 shows an example resin molded product 1 according to a second embodiment. FIG. 29 shows another example.

FIG. 28 shows the resin molded product 1 including a three-dimensional insert 60 having a curved surface. The insert 60 includes, for example, a three-dimensional base 62 of a thermosetting resin, the film substrate 11 attached to the base 62, and the copper wire 16 and the multiple electrode terminals 15 on the film substrate 11. The multiple electrode terminals 15 are located on a curved area 61 of the base 62. The opening 21 in the resin molded body 20 is also located in the curved area 61. In the second embodiment as well, the wall 21a of the opening 21 is curved concavely.

The insert 60 has a main surface 60a including the multiple electrode terminals 15. The resin molded body 20 is formed on the main surface 60a of the insert 60.

The block 50 for forming the opening 21 has a shape similar to a rectangular prism. A contact surface 53 of the block 50 that comes in contact with the curved area 61 is curved to conform to the curved area 61. A facing surface 54 facing the contact surface 53 is curved to easily conform to the surface of the resin molded body 20 when the molds are closed.

FIG. 29 shows the resin molded product 1 including a three-dimensional insert 70 including at least two flat areas (a first flat area 71 and a second flat area 72). The insert 70 includes, for example, a three-dimensional base 73 of a thermosetting resin, the film substrate 11 attached to the base 73, and the copper wire 16 and the multiple electrode terminals 15 on the film substrate 11. The electrode terminals 15 are located on the first flat area 71 and the second flat area 72 of the base 73. The opening 21 in the resin molded body 20 is located in a boundary portion across the first flat area 71 and the second flat area 72. In the second embodiment as well, the wall 21a of the opening 21 is curved concavely.

The insert 70 has a main surface 70a including the multiple electrode terminals 15. The resin molded body 20 is formed on the main surface 70a of the insert 70.

The block 50 for forming the opening 21 has a shape of two rectangular prisms combined into an inverted V shape. A first contact surface 55 of the block 50 that comes in contact with the first flat area 71 is flat to conform to the first flat area 71. A second contact surface 56 that comes in contact with the second flat area 72 is flat to conform to the second flat area 72. A first facing surface 57 facing the first contact surface 55 and a second facing surface 58 facing the second contact surface 56 are two flat surfaces to easily conform to surfaces of the resin molded body 20 when the molds are closed.

### (6) Method for Manufacturing Resin Molded Product

In a method for manufacturing the resin molded product 1 according to the second embodiment shown in FIGS. 28 and 29, the block 50 has a different shape based on the insert 60 or 70 having a shape different from the shape of the film 10 in the first embodiment. However, the method for manufacturing the resin molded product 1 according to the second embodiment includes the same processing shown in the flowchart in FIG. 4. Thus, the resin molded product 1 according to the second embodiment can be manufactured with the same manufacturing method described in (2) Method for Manufacturing Resin Molded Product in the first embodiment.

### (7) Modifications

### (7-1) Modification 2A

In the second embodiment, the opening 21 in the resin molded product 1 is not filled with the sealant (refer to FIGS. 28 and 29). However, the resin molded product 1 according to the second embodiment may have the opening 21 filled with the sealant, similarly to the resin molded product 1 according to the first embodiment. In the second embodiment, when the opening 21 is not filled with the sealant, each of the exposed electrode terminals 15 may be joined to the connection pin 30, and the connection pin 30 may be connected to the connector 35 as described with reference to FIG. 11.

### (7-2) Modification 2B

In the method for manufacturing the resin molded product 1 according to the second embodiment, the insert 60 or 70 may include a restrictor for restricting the movement of the block 50 as described in modification 1B of the first embodiment. The restrictor included in the insert 60 or 70 may be, for example, the protrusions 17 shown in FIG. 12, or an opening in the film substrate 11.

### (7-3) Modification 2C

In the method for manufacturing the resin molded product 1 according to the second embodiment, a preventer for preventing the movement of the block 50 may be included in at least one of the first mold 91 or the second mold 92 as described in modification 1C of the first embodiment. The preventer included in at least one of the first mold 91 or the second mold 92 may be, for example, the recess 93 shown in FIG. 13. The preventer may be included in at least one of the first mold 91 or the second mold 92.

### (7-4) Modification 2D

In the second embodiment, the multiple electrode terminals 15 are located on the curved area 61 of the insert 60, or on the first flat area 71 and the second flat area 72. However, the multiple electrode terminals 15 may be located on other areas, and may be located on, for example, multiple different curved areas or on a curved area and a flat area.

### (7-5) Modification 2E

In the second embodiment, the resin molded product 1 includes no design layer. However, the resin molded product 1 according to the second embodiment may include a design layer that has the same function as at least one of the outer design layer 12 or the inner design layer 13 in the first embodiment. The resin molded product 1 according to the second embodiment may include an overcoat layer that has the same function as the overcoat layer 14 in the first embodiment.

### (7-6) Modification 2F

In the second embodiment, the single film substrate 11 includes the electrode terminals 15 and the copper wire 16. However, multiple film substrates 11 may be stacked on one another, and each of the multiple film substrates 11 may include the electrode terminals 15 and the copper wire 16.

### (7-7) Modification 2G

In the second embodiment, each electrode terminal 15 has a uniform thickness. However, each electrode terminal 15 in the second embodiment may have various shapes as described in modifications 1D and 1G of the first embodiment.

### (7-8) Modification 2H

In the second embodiment, the single block 50 is used for the multiple electrode terminals 15. However, multiple blocks 50 may be used for the multiple electrode terminals 15 in the second embodiment.

### (7-9) Modification 2I

In the second embodiment, the multiple electrode terminals 15 are located on the main surface 60a or 70a, and the block 50 is placed on the main surface 60a or 70a. The multiple electrode terminals 15 may also be located on the other main surface, and the block 50 may also be placed on the other main surface.

### (7-10) Modification 2J

In the second embodiment, the entire portion of the block 50 is formed from a single type of polymer compound. However, as described in modification 1J of the first embodiment, the block 50 may be formed from multiple types of polymer compounds, and a material other than a polymer compound may be used for a portion of the block 50 other than the first portion 51 and the second portion 52. When a material other than a polymer compound is used for the block 50, the polymer compound may constitute greater than or equal to 50% of the total volume of the block 50.

### (8) Features

(8-1)
The method for manufacturing the resin molded product 1 according to the first embodiment and the second embodiment includes the first step S1 of placing the insert 60 or 70 or the film 10 as an insert having the main surface 10a, 60a, or 70a between the first mold 91 and the second mold 92, a second step S2 of closing the first mold 91 and the second mold 92 and defining the molding space SP including the insert 60 or 70 or the film 10 as an insert, a third step S3 of pouring the molten resin MR into the molding space SP and forming the resin molded body 20 including the insert 60 or 70 or the film 10 as an insert, and a fourth step S4 of opening the first mold 91 and the second mold 92 and removing the resin molded body 20 including the insert 60 or 70 or the film 10 as an insert.

In the first step S1, the block 50 is placed on the main surface 10a, 60a, or 70a to be in contact with the electrode terminals 15 located on the main surface 10a, 60a, or 70a for electrical connection.

In the second step S2, the block 50 and the insert 60 or 70 or the film 10 as an insert are held between the first surface 91a of the first mold 91 as the first inner surface of the molding space SP and the second surface 92a of the second mold 92 as the second inner surface of the molding space SP to elastically deform the block 50 containing an elastic polymer compound in the first portion 51 in contact with the first surface 91a and the second portion 52 in contact with the second surface 92a.

In the third step S3, the space surrounding the block 50 is filled with the molten resin MR, and the resin surrounding the block 50 is solidified.

In the fourth step S4, the block 50 is removed from the resin molded body 20 to expose the electrode terminals 15.

With the method for manufacturing the resin molded product according to the first embodiment and the second embodiment or their modifications, the block 50 comes in close contact with the electrode terminals 15 and the surrounding portions in closing the molds in the second step S2 when the electrode terminals 15 in the insert 60 or 70 or the film 10 as an insert and the surrounding portions include a greatly uneven portion, or when the positions of the placed electrode terminals 15 vary greatly. The space surrounding the block 50 can be filled with the molten resin MR with the block 50 being in close contact with the electrode terminals 15 and the surrounding portions in the third step S3.
(8-2)
   In the method for manufacturing the resin molded product 1 according to the first embodiment and the second embodiment or their modifications, a polymer compound contains, for example, a silicone elastomer or a fluoroelastomer, or is processed to be spongy, thereby being elastic. Thus, the block 50 that is appropriately deformable and easily comes in close contact with the electrode terminals 15 and the surrounding portions can be used for manufacturing the resin molded product 1.
(8-3)
   In the method for manufacturing the resin molded product 1 according to the first embodiment and the second embodiment or their modifications, the first distance between the surface of the first portion 51 and the surface of the second portion 52 before elastic deformation of the block 50 held between the first surface 91a and the second surface 92a is in a range of 1.2 to 3 times the second distance between the surface of the first portion 51 and the surface of the second portion 52 after the elastic deformation. The block 50 is thus less likely to be damaged, and can be sufficiently in close contact with the electrode terminals 15 and the surrounding portions.
(8-4)
   In the method for manufacturing the resin molded product 1 according to the first embodiment and the second embodiment or their modifications, the block 50 has a hardness of 20 Shore A or more and 70 Shore A or less. Thus, the block 50 having an appropriate hardness can be firmly in close contact with the electrode terminals 15 and the surrounding portions.
(8-5)
   In the method for manufacturing the resin molded product 1 according to the first embodiment and the second embodiment or their modifications, a polymer compound constitutes greater than or equal to 50% of the total volume of the block 50. Thus, the block 50 that is appropriately deformable and easily comes in close contact with the electrode terminals 15 and the surrounding portions can be used for manufacturing the resin molded product 1.
(8-6)
   The resin molded product 1 according to the first embodiment and the second embodiment or their modifications includes the resin molded body 20 having a predetermined shape, and the film 10 as an insert or the insert 60 or 70. The film 10 as an insert or the insert 60 or 70 is inserted in the resin molded body 20 and includes the electrode terminals 15 on the main surface 10a, 60a, or 70a. The resin molded body 20 has the opening 21 through which the electrode terminals 15 are partially exposed. The opening 21 has a concavely curved wall surface.

The resin molded product 1 with this structure can fix, for example, the sealant 40 firmly with the concavely curved wall surface of the opening 21 when the opening 21 is filled with the sealant 40.

(8-7)
In the resin molded product 1 according to the first embodiment and the second embodiment or their modifications, the electrode terminals 15 may include an uneven surface or a curved surface. The resin molded product 1 can have high quality with the electrode terminals 15 having a shape appropriate for its application and no resin entering the electrode terminals 15 or the surrounding portions.

(8-8)
The resin molded product 1 according to the second embodiment or its modifications includes the insert 60 or 70 including the multiple electrode terminals 15. The multiple electrode terminals 15 are located on the curved area 61 of the insert 60, or on the first flat area 71 and the second flat area 72 of the insert 70. In this manner, the resin molded product 1 can have high quality with the multiple electrode terminals 15 having a shape conforming to the shape of the insert 60 or 70 and no resin entering the electrode terminals 15 or the surrounding portions.

Although the first embodiment and the second embodiment of the present invention have been described, the present invention is not limited to the embodiments, and may be changed in various manners without departing from the spirit and scope of the present invention. The embodiments and the modifications described herein may be combined in any manner as appropriate.

### REFERENCE SIGNS LIST

- 1: resin molded product
- 10: film (example insert)
- 10a: main surface
- 15: electrode terminal
- 20: resin molded body
- 21: opening
- 40: sealant
- 50: block
- 51: first portion
- 52: second portion
- 60, 70: insert
- 60a, 70: amain surface
- 61: curved area
- 71: first flat area
- 72: second flat area
- 91: first mold
- 91a: first surface
- 92: second mold
- 92a: second surface
- MR: molten resin
- SP: molding space

## Claims

1. A method for manufacturing a resin molded product, the method comprising:
a first step of placing an insert between a first mold and a second mold, the insert having a main surface;
a second step of closing the first mold and the second mold and defining a molding space including the insert;
a third step of pouring a molten resin into the molding space and forming a resin molded body including the insert; and
a fourth step of opening the first mold and the second mold and removing the resin molded body including the insert,
wherein the first step includes placing a block on the main surface to cause the block to be in contact with an electrode terminal located on the main surface for electrical connection,
the second step includes holding the insert and the block between a first surface of the first mold and a second surface of the second mold and elastically deforming the block, the first surface of the first mold is a first inner surface of the molding space, the second surface of the second mold is a second inner surface of the molding space, and the block comprises an elastic polymer compound in a first portion of the block in contact with the first surface and a second portion of the block in contact with the second surface,
the third step includes filling a space surrounding the block with the molten resin and solidifying the molten resin surrounding the block, and
the fourth step includes removing the block from the resin molded body and exposing the electrode terminal.

2. The method according to claim 1, wherein
the elastic polymer compound comprises a silicone elastomer or a fluoroelastomer, or is processed to be spongy, thereby being elastic.

3. The method according to claim 1 or claim 2, wherein
a first distance between a surface of the first portion and a surface of the second portion before elastic deformation of the block held between the first surface and the second surface is in a range of 1.2 to 3 times a second distance between the surface of the first portion and the surface of the second portion after elastic deformation of the block.

4. The method according to claim 1 or claim 2, wherein
the block has a hardness of 20 Shore A or more and 70 Shore A or less.

5. The method according to claim 1 or claim 2, wherein
the elastic polymer compound constitutes greater than or equal to 50% of a total volume of the block.

6. A resin molded product, comprising:
a resin molded body having a predetermined shape; and
an insert in the resin molded body, the insert including an electrode terminal for electrical connection on a main surface of the insert,
wherein the resin molded body has an opening through which the electrode terminal is partially exposed, and
the opening has a concavely curved wall surface.

7. The resin molded product according to claim 6, wherein
the electrode terminal has an uneven surface or a curved surface.

8. The resin molded product according to claim 6 or claim 7, wherein
the insert includes a plurality of electrode terminals, and
the plurality of electrode terminals are on a curved area of the insert, or on a first flat area and a second flat area of the insert.
